Europäisches Patentamt

European Patent Office

Office européen des brevets

(19)

(11) Veröffentlichungsnummer: **0 140 115**
**A2**

# EUROPÄISCHE PATENTANMELDUNG

(12)

(21) Anmeldenummer: **84111032.3**

(22) Anmeldetag: **15.09.84**

(51) Int. Cl.⁴: **H 01 R 9/05**
**H 02 G 3/06**

(30) Priorität: **06.10.83 DE 3336400**

(43) Veröffentlichungstag der Anmeldung:
**08.05.85 Patentblatt 85/19**

(84) Benannte Vertragsstaaten:
**CH DE FR GB IT LI**

(71) Anmelder: **Schaltbau Gesellschaft mbH**
**Klausenburger Strasse 6**
**D-8000 München 80(DE)**

(72) Erfinder: **Wilhelm, Udo**
**Kreuzstrasse 3**
**D-8059 Walpertskirchen(DE)**

(74) Vertreter: **Schneider, Wilhelm, Dipl.-Phys.**
**c/o kabelmetal electro GmbH Dipl.-Phys. Wilhelm**
**Schneider Dipl.-Ing. Eberhard Mende Dipl.-Ing. Roger**
**Döring Kabelkamp 20 Postfach 260**
**D-3000 Hannover 1(DE)**

(54) **Steckerteil mit Hülse und Überwurfmutter.**

(57) In einem aus Hülse und Überwurfmutter bestehenden Steckerteil sind zum Festlegen der Schirme abgeschirmter Kabel Ringpaare vorgesehen, die mit gegen die Hülsenachse geneigten konischen Flächen aneinander liegen und mit planparallelen Stirnflächen zwischen Schulter an der Überwurfmutter und an der Hülse liegen.

Fig.1

EP 0 140 115 A2

Schaltbau Gesellschaft mbH

München

SB 231

5. Okt. 1983

Steckerteil mit Hülse und Überwurfmutter

Gegenstand der Erfindung ist ein Steckerteil mit Hülse und Überwurfmutter für abgeschirmte Kabel oder Leitungen, in welchem der Schirm durch Einklemmen zwischen zwei konisch gegen die Hülsenachse geneigten, parallelen Flächen festgelegt ist, die durch das Aufdrehen der Überwurfmutter auf die Hülse gegeneinander gepreßt werden.

Ein solches Steckerteil ist Gegenstand des DE-GM 80 07 106. Bei der bekannten Ausführungsform ist die eine der konisch geneigten Flächen an die Hülse und die andere konisch geneigte Fläche an die Überwurfmutter angeformt. Damit sind zwei Nachteile verbunden. Beim Aufdrehen der Überwurfmutter auf die Hülse führen die beiden konisch geneigten Flächen zwangsläufig eine rotatorische Relativbewegung gegeneinander aus. Beim Einklemmen des Schirmes besteht dann die Gefahr, daß der Schirm beschädigt und bei Geflechtschirmen abgerissen werden kann. Darüber hinaus sind die Steckerteile nur für einen Kabeldurchmesser genau passend, so daß eine verhältnismäßig aufwendige Lagerhaltung erforderlich werden kann.

Der Erfindung liegt die Aufgabe zugrunde, ein Steckerteil anzugeben, bei dem die Gefahr der Beschädigung des Schirmes bei der Konfektionierung gemindert ist. Weiteres Ziel ist eine vielseitigere Verwendbarkeit der Steckerteile hinsichtlich der für sie passenden Kabeldurchmesser.

Beim erfindungsgemäßen Steckerteil sind die konisch geneigten Flächen,zwischen denen der Schirm eingeklemmt wird, je einem Ring zugeordnet,und die beiden Ringe liegen mit planparallelen Stirnflächen zwischen Schultern an der Überwurfmutter und der Hülse. Die erfindungsgemäße Ausführungsform hat den Vorteil, daß beim Aufdrehen der Überwurfmutter auf die Hülse der Schirm nicht beschädigt oder gar abgerissen wird, weil die konisch geneigten Flächen gegeneinander keine Zwangsbewegungen ausführen.

Weil die Ringe kleiner sind als die Hülse samt Mutter und sie als Drehteile leichter und billiger herzustellen sind, wird zusätzlich die Lagerhaltung verbilligt, wenn in Weiterbildung der Erfindung für eine Dimensionierung von Hülse und Überwurfmutter Ringpaare mit unterschiedlicher lichter Weite, aber gleicher Dimensionierung der Stirnflächen vorgesehen sind. Bei der Konfektionierung können dann Kabel mit unterschiedlichen Durchmessern allein durch die Wahl der Ringpaare mit Hülse und Überwurfmutter ein und derselben Dimensionierung verwendet werden.

Die Figuren zeigen in zum Teil schematischer Darstellung Ausführungsbeispiele von Steckerteilen nach der Lehre der Erfindung.

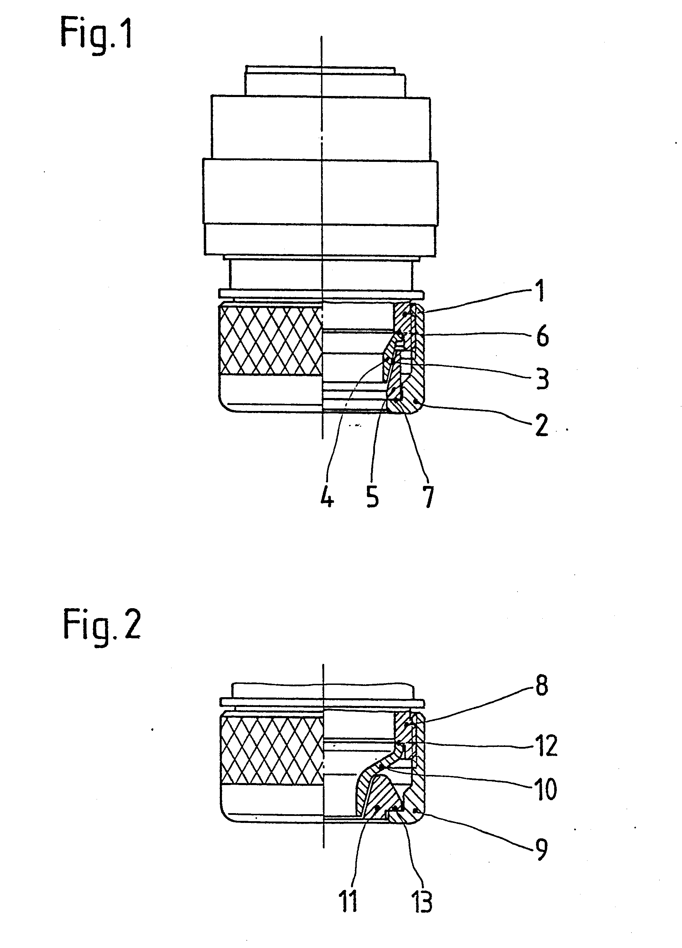

In Fig. 1 ist die Hülse des Steckerteils mit 1, die Überwurfmutter mit 2 bezeichnet. Die konisch geneigten Flächen,zwischen denen bei der Konfektionierung der Schirm des Kabels festgelegt wird, sind mit 3 bezeichnet und je eine den Ringen 4 und 5 zugeordnet. Bei 6 liegt der Ring 4 mit einer Stirnfläche an einer Schulter der Hülse 1 an, bei 7 der Ring 5 mit einer Stirnfläche, die der des Ringes 4 planparallel ist, an einer Schulter der Hülse 2.

Fig. 2 zeigt eine Hülse 8 und eine Überwurfmutter 9,die die gleiche Dimensionierung haben, wie die in Fig. 1. Jedoch sind hier zwei Ringe 10 und 11 verwendet, die eine geringere lichte Weite für das Kabel freilassen als die Ringe 4 und 5 in Fig. 1, deren mit 12 und 13 bezeichnete Stirnflächen aber gleich dimensioniert sind wie in Fig. 1, so daß Hülse und Überwurfmutter die gleichen Maße haben können wie in Fig. 1.

0140115

Schaltbau Gesellschaft mbH
München

SB 231
5. Okt. 1983

Patentansprüche

1. Steckerteil mit Hülse und Überwurfmutter für abgeschirmte Kabel oder Leitungen, in welchem der Schirm durch Einklemmen zwischen zwei konisch gegen die Hülsenachse geneigten, parallelen Flächen festgelegt ist, die durch das Aufdrehen der Überwurfmutter auf die Hülse gegeneinander gepreßt werden, dadurch gekennzeichnet, daß die Flächen (3) je einem Ring (4 + 8) zugeordnet sind und die beiden Ringe (4 + 5) mit planparallelen Stirnflächen zwischen Schultern (6 + 7) an der Überwurfmutter (2) und der Hülse (1) liegen.

2. Steckerteil nach Anspruch 1, dadurch gekennzeichnet, daß für eine Dimensionierung von Hülse (8) und Überwurfmutter (9) Ringpaare (10 + 11) mit unterschiedlicher lichter Weite, aber gleicher Dimensionierung der Stirnflächen vorgesehen sind.

Fig.1

Fig.2

0140115

1/1